# EUROPÄISCHE PATENTSCHRIFT

(11) **EP 3 285 681 B1**
(45) Veröffentlichungstag und Bekanntmachung des Hinweises auf die Patenterteilung: **22.05.2019**
(21) Anmeldenummer: 16717155.2
(22) Anmeldetag: 19.04.2016
(51) Int. Cl.: A61C 5/77

(54) **VORRICHTUNG UND VERFAHREN ZUR HALTERUNG VON PROTHESENZÄHNEN**
DEVICE AND METHOD FOR HOLDING PROSTHETIC TEETH
DISPOSITIF ET PROCÉDÉ POUR LA FIXATION DE DENTS PROTHÉTIQUES

(30) Priorität: 23.04.2015 DE 102015106270
(43) Veröffentlichungstag der Anmeldung: 28.02.2018
(73) Patentinhaber: Kulzer GmbH, 63450 Hanau (DE)
(72) Erfinder: WOLDEGERGIS, Yohannes, 63457 Hanau (DE)
(74) Vertreter: Schultheiss & Sterzel Patentanwälte PartG mbB
(86) Internationale Anmeldenummer: PCT/EP2016/058630
(87) Internationale Veröffentlichungsnummer: WO 2016/169921

(56) Entgegenhaltungen:
- WO-A1-2013/124452
- DE-A1-102011 101 678
- DE-A1-102012 007 706
- DE-A1-102012 201 744

## Beschreibung

Die Erfindung betrifft eine Vorrichtung zur Halterung von Prothesenzähnen und ein Verfahren zur Positionierung und Bearbeitung von Prothesenzähnen.

Die Erfindung betrifft auch ein Set zur Durchführung eines solchen Verfahrens mit einer solchen Vorrichtung.

Die Erfindung betrifft somit die Herstellung und Bereitstellung von konfektionierten Prothesenzähnen zur Weiterverarbeitung für partielle und totale Dental-Kunststoffprothesen, die maschinell im CAM-Verfahren (CAM - Computer-Aided Manufacturing, Deutsch: rechner-unterstützte Fertigung) produziert werden und die computergestützt mit CAD-Verfahren (CAD - Computer-Aided Design, Deutsch: rechnerunterstützte Konstruktion) konstruiert werden. Die Prothesenzähne können als Halbzeug zur teilweisen oder vollständigen Herstellung von Dental-Kunststoffprothesen mit CAM-Verfahren bereitgestellt werden.

Der derzeit gängige Weg ist die analoge Erstellung von Prothesenzähnen. Dabei werden die Prothesenzähne manuell und einzeln auf einer Wachsbasis aufgestellt. Diese Wachsprothese wird im nächsten Schritt in einer Küvette mit Gips eingebettet, um dann nach Aushärten des Gipses die Wachsbasis mit heißem Wasser herauszuwaschen und einen Hohlraum für den Prothesenkunststoff zu schaffen. Die Prothesenzähne verbleiben dabei im Gips. Ein entsprechender Gips wird in den Hohlraum injiziert oder "gestopft" und man erhält nach Aushärtung des Kunststoffs die Prothese beziehungsweise den fertigen Prothesenzahn.

Bei der Aufstellung vorkonfektionierter Prothesenzähne werden diese der jeweiligen Mundsituation des Patienten vom Zahntechniker angepasst und beschliffen. Es gibt bereits erste Verfahren, wie beispielsweise die aus der DE 10 2009 056 752 A1 oder der WO 2013 124 452 A1 bekannten Verfahren, bei denen die Teil- beziehungsweise Totalprothese digital aufgestellt und über CAD-CAM-Verfahren produziert wird.

Nachteilig ist hieran die Positionierung der Prothesenzähne in einer Prothesenbasisplatte. In der Regel wird dafür eine passgenaue Mulde in einer Prothesenbasisplatte vorgefertigt, um dann die konfektionierten Prothesenzähne einzukleben. Das funktioniert jedoch nur, wenn ausreichend Platz vorhanden ist. In den meisten Fällen muss der Prothesenzahn aus Platzgründen beschliffen werden. Vorkonfektionierte Prothesenzähne sind im Rahmen der Erstellung von prothetischen Arbeiten in der Regel mindestens von basal zu bearbeiten. Bei manueller Umsetzung erfolgt die Bearbeitung einzeln pro Prothesenzahn durch den Verarbeiter. In diesem Fall passt er aber nicht mehr in die vorproduzierte Mulde in der Prothesenbasisplatte.

Die DE 10 2011 101 678 A1 schlägt vor, dass der Kronenbereich eines Prothesenzahns in eine Trägerschicht eingebettet wird und den Prothesenzahn anschließend zu bearbeiten. Diese Befestigung der Prothesenzähne erfolgt entweder mittels Wachs oder aber anderen schmelz- oder aushärtbaren Massen. Dadurch wird eine feste und präzise Verbindung bei gleichzeitig definierter Positionierung der Prothesenzähne erzielt. Nachteilig ist hieran, dass der Prothesenzahn bereichsweise freigelegt werden muss, um den eingebetteten Kronenbereich zu bearbeiten. Die Nachteile des Verfahrens liegen auch in der aufwendigen Herstellung der Körper. Diese sind einzeln oder in Gruppen durch Einsetzen der fertigen Prothesenzähne in einen Halter, Aufsetzen eines Außenrahmens und abschließendes Ausgießen mit einem Verbindungsmedium (z. B. Wachs) herzustellen. Dadurch ist das Eingießen der Prothesenzähne mit der die Trägerschicht bildenden Masse handwerklich aufwendig.

Die Trägerschicht muss aushärten, bevor der Prothesenzahn bearbeitet werden kann, da insbesondere bei der Verwendung von automatisierten CAM-Fräsen erhebliche Kräfte auftreten. Die Positionsgenauigkeit des Verfahrens leidet zudem unter möglichen Verformungen der noch nicht vollständig ausgehärteten Trägerschicht, so dass im Extremfall der nachbearbeitete Prothesenzahn nicht exakt genug ausgefräst wird und deswegen entsorgt werden muss. Ferner kann eine solche Trägerschicht meist nur mit einem gewissen Aufwand wieder vollständig von dem Prothesenzahn entfernt werden. Nach der Verwendung müssen die Überreste der abgetragenen Trägerschicht entsorgt werden.

Die Aufgabe der Erfindung besteht also darin, die Nachteile des Stands der Technik zu überwinden. Es soll eine Vorrichtung nach Anspruch 1 und ein Verfahren nach Anspruch 11 bereitgestellt werden, mit dem eine möglichst einfache, vollständige und kostengünstige Bearbeitung der Prothesenzähne möglich ist. Dabei sollen möglichst wenige Nachbearbeitungsschritte notwendig sein. Möglichst viele notwendige Teile sollen wiederverwendbar sein, um eine Serienbearbeitung zu ermöglichen.

Die Aufgaben der Erfindung werden gelöst durch eine Vorrichtung zur Halterung von Prothesenzähnen, die Vorrichtung aufweisend eine Negativform und zumindest eine Klemmeinrichtung, wobei in der Negativform Vertiefungen zur Aufnahme von koronalen Seiten der Prothesenzähne vorgesehen sind, wobei die Vertiefungen derart geformt sind, dass die Prothesenzähne in einer eindeutigen Lage und Orientierung in die Vertiefungen einzusetzen sind, wobei die zumindest eine Klemmeinrichtung mit einem Verbindungsmittel an der Negativform lösbar zu befestigen ist oder befestigt ist und wobei die zumindest eine Klemmeinrichtung zumindest ein elastisches Haltemittel aufweist, wobei mit dem zumindest einen elastischen Haltemittel eine elastische Kraft aus zumindest zwei unterschiedlichen Richtungen auf in die Negativform eingesetzten Prothesenzähne auszuüben ist oder ausgeübt wird, während die zumindest eine Klemmeinrichtung an der Negativform befestigt ist, so dass die Prothesenzähne in der Vorrichtung fixiert sind.

Erfindungsgemäß bevorzugt ist das Verbindungsmittel ein Teil der Vorrichtung, wobei besonders bevorzugt das Verbindungsmittel mit der Negativform und/oder der Klemmeinrichtung verbunden ist. Die Vorrichtung weist erfindungsgemäß also neben der Negativform und der Klemmeinrichtung auch das Verbindungsmittel auf.

Das zumindest eine Haltemittel kann in sich selbst elastisch sein, wie beispielsweise ein Gummiblock oder ein Kunststoff-Schaum oder das zumindest eine Haltemittel kann durch Verformung eine elastische Kraft ausüben, wie beispielsweise eine Stahlfeder oder eine Spange aus Metall oder einem elastischen Kunststoff.

Die Klemmeinrichtung und das Haltemittel können im 3D-Druckverfahren hergestellt werden. Es ist durch eine Strukturierung des Haltemittels als Gitter oder durch eine Porenstruktur möglich, dass das Haltemittel eine andere Elastizität aufweist als die restliche Klemmeinrichtung, die beispielsweise massiv aus dem gleichen Material gedruckt werden kann.

Mit der Erfindung wird auch vorgeschlagen, dass die zumindest eine Klemmeinrichtung auf der Seite der Negativform zu befestigen ist, in der die Vertiefungen angeordnet sind.

Hierdurch kann erreicht werden, dass die elastische Kraft eine Vektor-Komponente aufweist, die die Prothesenzähne in die Vertiefungen der Negativform presst.

Des Weiteren kann erfindungsgemäß vorgesehen sein, dass die Vertiefungen Negative der koronalen Enden der Prothesenzähne bilden.

Hierdurch wird eine besonders gute Passform erzielt und die Prothesenzähne in ihrer Position und Ausrichtung in der Negativform gut definiert.

Mit einer Weiterbildung der vorliegenden Erfindung wird vorgeschlagen, dass die Negativform eine ebene Oberfläche aufweist, in der die Vertiefungen angeordnet sind, wobei vorzugsweise die Negativform eine der ebenen Oberfläche gegenüberliegende Standseite oder Aufstellfläche aufweist, wobei besonders bevorzugt die Negativform eine Platte ist.

Hierdurch wird die Bearbeitung der in der Vorrichtung fixierten Prothesenzähne vereinfacht. Gleichzeitig wird die Anwendung der Vorrichtung beim Einsetzen der Prothesenzähne für den Anwender erleichtert.

Es kann auch vorgesehen sein, dass die Vorrichtung mehrere Prothesenzähne aufweist, wobei die Prothesenzähne in den Vertiefungen eingesetzt sind und mit der zumindest einen Klemmeinrichtung an der Negativform fixiert sind.

Wenn die Prothesenzähne bereits in der gewünschten Position und Ausrichtung in der Vorrichtung fixiert sind, entfällt die Arbeit, diese in die Vorrichtung einzusetzen und gleichzeitig werden mögliche Fehlanwendungen ausgeschlossen.

Ferner kann vorgesehen sein, dass das Verbindungsmittel zumindest einen Stift, zumindest eine Bohrung, zumindest eine Steckverbindung, zumindest eine Nut, zumindest eine Feder, zumindest eine Klammer, zumindest eine Zwinge, zumindest eine Gewindestange, zumindest eine Schraube, zumindest eine Gewindebohrung, zumindest ein Rastmittel, zumindest einen Druckknopf oder zumindest einen Klebstoff oder eine Kombination dieser Mittel aufweist, mit dem oder mit denen die zumindest eine Klemmeinrichtung an der Negativform zu befestigen ist oder befestigt ist.

Mit diesen Verbindungsmitteln kann eine zuverlässige und lösbare Verbindung der Klemmeinrichtung mit der Negativform erreicht werden. Bei der Verwendung eines Klebstoffs ist es wichtig, dass sich der Klebstoff ohne großen Aufwand unter solchen Bedingungen lösen lässt, die für die Prothesenzähne unschädlich sind. Beispielweise kann ein Wachs als Klebstoff verwendet werden, das sich bei Temperaturen zwischen 60°C und 110°C verflüssigt.

Bevorzugte Ausgestaltungen erfindungsgemäßer Vorrichtung können sich dadurch auszeichnen, dass die Negativform einteilig ist.

Hierdurch kann Aufwand bei der Verwendung der Negativform vermieden werden.

Ferner kann vorgesehen sein, dass die zumindest eine Klemmeinrichtung mehrteilig ist und an den Teilen der zumindest einen Klemmeinrichtung Befestigungsmittel vorgesehen sind, über die die Teile aneinander zu befestigen sind.

Hierdurch kann das Anlegen der zumindest einen Klemmeinrichtung an den Prothesenzähnen erleichtert werden. Alternativ kann eine einteilige Klemmeinrichtung auch aus Richtung der Basis der Prothesenzähne über die Prothesenzähne übergestülpt werden.

Bevorzugt kann auch vorgesehen sein, dass das zumindest eine elastische Haltemittel aus einem nicht plastisch verformbaren Material besteht, bevorzugt aus einem Material mit einem Elastizitätsmodul von wenigstens 0,2 GPa, besonders bevorzugt von 0,2 GPa bis 6 GPa.

Das Material ist in diesem Fall bevorzugt ein Kunststoff. Mit diesen beziehungsweise solchen Materialien mit diesen Elastizitätsmoduln kann eine elastische Kraft auf die Prothesenzähne ausgeübt werden, ohne dass sich die Haltemittel in die Prothesenzähne eindrücken und diese beschädigen. Gleichzeitig ist die elastische Kraft zur Fixierung ausreichend, um die bei der Bearbeitung der Prothesenzähne auftretenden Kräfte aufnehmen zu können, ohne dass sich die Position und die Lage der Prothesenzähne in der Vorrichtung verändern.

Gemäß einer bevorzugten Ausführung der Erfindung kann vorgesehen sein, dass das zumindest eine elastische Haltemittel zumindest ein Metallband ist, insbesondere zumindest ein Band aus Federstahl ist, wobei vorzugsweise an den zu den Prothesenzähnen weisenden Oberflächen des Haltemittels Kunststoffbeschichtungen vorgesehen sind.

Hierdurch kann die Klemmeinrichtung besonders einfach und reversibel an den Prothesenzähnen befestigt werden. Die Metallbänder sind vorzugsweise als Spangen geformt. Die Herstellung einer Klemmeinrichtung mit derartigen Haltemitteln ist besonders einfach und kostengünstig möglich.

Bevorzugt kann auch vorgesehen sein, dass die basalen Enden der in der Vorrichtung fixierten Prothesenzähne aus der zusammengesetzten Vorrichtung überstehen.

Hiermit wird erreicht, dass die basalen Enden der Prothesenzähne später gut bearbeitet werden können, während sie in der Vorrichtung fixiert sind, so dass die Vorrichtung beispielsweise als Halterung für eine Fräse verwendet werden kann.

Des Weiteren kann vorgesehen sein, dass die Vertiefungen derart tief sind, dass sie bis maximal zum Beginn der Hinterschnittbereiche der Prothesenzähne reichen.

Durch diese Maßnahme kann erreicht werden, dass die Prothesenzähne nach dem Einsetzen in die Negativform bereits derart stabil in den Vertiefungen sitzen, dass die Klemmeinrichtung ohne großen Aufwand an der Negativform befestigt werden kann, ohne dass die Position und die Lage der Prothesenzähne durcheinander gebracht wird.

Des Weiteren kann vorgesehen sein, dass die Vertiefungen derart tief sind, dass sie zumindest 10% der Höhe der Prothesenzähne aufnehmen, bevorzugt, dass sie zumindest 25% der Höhe der Prothesenzähne aufnehmen.

Die Höhe der Prothesenzähne ist die Länge der Prothesenzähne von dem basalen Ende der Prothesenzähne bis zum koronalen Ende der Prothesenzähne.

Ferner kann vorgesehen sein, dass in jeder Vertiefung wenigstens eine durchgehende Verbindung vorgesehen ist, durch die ein Unterdruck in der Vertiefung zu erzeugen ist.

Die zumindest eine durchgehende Verbindung kann beispielsweise eine durchgehende Bohrung sein, die sich von der Vertiefung bis zu einer Oberfläche der Negativform außerhalb der Vertiefung erstreckt und die an eine Unterdruckquelle angeschlossen werden kann beziehungsweise angeschlossen ist. Mit dieser Maßnahme lassen sich die Prothesenzähne in die Vertiefungen ansaugen und dadurch in den Vertiefungen beziehungsweise an der Negativform befestigen. Zudem werden bei passender Form der Vertiefungen die Prothesenzähne in die richtige Position und Ausrichtung gesaugt. Die Wirkung ist also dann, wenn die Vertiefungen Negative der koronalen Seiten der Prothesenzähne sind, besonders stark. Sobald die Prothesenzähne mit der zumindest einen Klemmeinrichtung fixiert sind, müssen die Prothesenzähne nicht mehr mit dem Vakuum beziehungsweise dem Unterdruck in die Vertiefungen gesaugt werden. Bevorzugt wird also die Verbindung zur Unterdruckquelle gelöst, nachdem die Klemmeinrichtung an der Negativform befestigt wurde.

Mit einer Weiterentwicklung der Erfindung wird vorgeschlagen, dass das zumindest eine Haltemittel der zumindest einen Klemmeinrichtung an den Zahnhälsen der Prothesenzähne anliegt.

Hierdurch wird sichergestellt, dass die basalen Seiten der Prothesenzähne zur Bearbeitung freiliegen. Bevorzugt wirkt die elastische Kraft punktuell aus zumindest drei Richtungen punktuell auf den Zahnhals jedes Prothesenzahns ein oder die elastische Kraft wirkt über zumindest zwei Flächen oder Linien aus zumindest zwei Richtungen auf den Zahnhals jedes Prothesenzahns ein. Hierdurch wird eine ausreichend stabile Fixierung der Prothesenzähne in der Vorrichtung erreicht.

Bevorzugte erfindungsgemäße Vorrichtungen können sich dadurch auszeichnen, dass die Summe der elastischen Kräfte des angelegten zumindest einen Haltemittels auf die Prothesenzähne die Prothesenzähne in Richtung der Vertiefungen der Negativform presst.

Das angelegte zumindest eine Haltemittel meint vorliegend das an die Prothesenzähne, die in die Negativform eingesetzt sind, angelegte zumindest eine Haltemittel. Hierdurch wird ein sicherer Sitz der Prothesenzähne in der Vorrichtung gewährleistet, insbesondere wenn die Vertiefungen Negative der koronalen Seiten der Prothesenzähne sind.

Die der vorliegenden Erfindung zugrundeliegenden Aufgaben werden auch gelöst durch ein Verfahren zur Fixierung, und bevorzugt zur Bearbeitung, von Prothesenzähnen, insbesondere mit einer erfindungsgemäßen Vorrichtung, aufweisend die folgenden Verfahrensschritte:
A) mehrere Prothesenzähne werden in Vertiefungen einer Negativform eingesetzt,
B) anschließend wird zumindest eine Klemmeinrichtung an die eingesetzten Prothesenzähne angelegt, wobei zumindest ein elastisches Haltemittel der zumindest einen Klemmeinrichtung an zumindest zwei Richtungen an den Zahnhälsen der Prothesenzähne anliegt, und
C) Befestigen der zumindest einen Klemmeinrichtung an der Negativform, so dass eine elastische Kraft des zumindest einen elastischen Haltemittels auf die Prothesenzähne aus wenigstens zwei Richtungen einwirkt, wobei die Prothesenzähne dadurch gegen die Negativform fixiert werden.

Der Zahnhals eines Prothesenzahns ist der Umfang des Prothesenzahns zwischen dem koronalen Ende und dem basalen Ende. Die Schritte B) und C) können gleichzeitig erfolgen.

Dabei kann vorgesehen sein, dass beim Anlegen der zumindest einen Klemmeinrichtung das zumindest eine Haltemittel die Prothesenzähne an ihren Zahnhälsen zumindest bereichsweise umschließt, wobei die Innenflächen des zumindest einen Haltemittels zumindest bereichsweise formschlüssig zu Bereichen der Außenflächen der Prothesenzähne passen.

Hierdurch wird eine besonders stabile Fixierung der Prothesenzähne in der Vorrichtung erreicht und gleichzeitig wird die elastische Kraft zur Halterung derart auf der Oberfläche der Zahnhälse verteilt, so dass keine mechanische Beeinträchtigung, wie ein Eindrücken der Oberfläche oder eine andere plastische Verformung der Prothesenzähne und auch des zumindest einen Haltemittels zu befürchten ist.

Des Weiteren kann vorgesehen sein, dass die zumindest eine Klemmeinrichtung derart an den Prothesenzähnen angelegt wird, dass die basalen Enden der Prothesenzähne überstehen.

Hierdurch wird sichergestellt, dass die Prothesenzähne basal zu bearbeiten sind.

Ferner kann vorgesehen sein, dass die zumindest eine Klemmeinrichtung und die Negativform mit den darin fixierten Prothesenzähnen in einer definierten Position in einer Halterung einer CAM-Vorrichtung zum Abtragen von Material der Prothesenzähne mit einem CAM-Verfahren befestigt werden und wenigstens ein basales Ende zumindest eines Prothesenzahns computergesteuert mit der CAM-Vorrichtung bearbeitet wird, wobei die CAM-Vorrichtung bevorzugt eine Computergesteuerte Fräseinrichtung ist, besonders bevorzugt eine Computer-gesteuerte Vier-Achs-Fräse oder Fünf-Achs-Fräse.

Damit wird das Verfahren bezüglich der basalen Bearbeitung der Prothesenzähne vervollständigt. Dieser Schritt nutzt die Vorteile, die eine erfindungsgemäße Vorrichtung und das erfindungsgemäße Verfahren zur Positionierung bietet, für automatisierte Verfahren, bei denen sich die erfindungsgemäße exakte Positionierung besonders vorteilhaft auswirkt.

Es wird auch vorgeschlagen, dass die äußeren Formen aller verwendeten vorkonfektionierten Prothesenzähne als erster Datensatz vorliegen und ein zweiter Datensatz die genaue Positionen aller fixierten vorkonfektionierten Prothesenzähne in der Negativform definiert, wobei eine anschließende Bearbeitung zumindest eines Prothesenzahns auf Basis des ersten und des zweiten Datensatzes durchgeführt wird, bevorzugt eine anschließende Bearbeitung mit einem CAD/CAM-Verfahren auf Basis des ersten und des zweiten Datensatzes durchgeführt wird.

Hierdurch werden die Vorteile der Fixierung für vollautomatisierte Nachbearbeitungsverfahren zugänglich gemacht, für die sie besonders gut geeignet sind. Erst durch die beanspruchte Fixierung wird nämlich eine einfache und kostengünstige Bereitstellung der Prothesenzähne in einer hohen Genauigkeit und Positionstreue möglich.

Mit einer Weiterbildung wird vorgeschlagen, dass alle vorkonfektionierten Prothesenzähne nur in jeweils einer vorgegebenen Position und Orientierung in die Negativform eingesetzt werden können und mit der zumindest einen Klemmeinrichtung fixiert werden können.

Hierdurch wird sichergestellt, dass eine eindeutige Position und Orientierung zur Nachbearbeitung vorliegt, ohne dass die Position und die Orientierung noch einmal kontrolliert werden müssten. Die Orientierung wird erfindungsgemäß auch als Lage oder Ausrichtung der Prothesenzähne bezeichnet. Die Position kann bevorzugt auch durch die natürliche Anordnung und Reihenfolge der Prothesenzähne gegeben werden, so dass eine intuitive korrekte Anordnung der Prothesenzähne unterstützt wird.

Es kann auch vorgesehen sein, dass vor dem Einsetzen der Prothesenzähne in die Negativform ein Haftvermittler auf der Oberfläche der Vertiefungen und/oder auf der Oberfläche der koronalen Seiten der Prothesenzähne aufgetragen wird.

Hierdurch kann ein besserer Halt der Prothesenzähne in den Vertiefungen der Negativform erreicht werden. Der Haftvermittler muss jedoch im Normalfall wieder von den Prothesenzähnen entfernt werden, wenn er nicht von selbst verdampft. Daher ist ein Ansaugen der Prothesenzähne in die Vertiefungen durch zumindest einen gasdurchlässigen Durchgang in jeder Vertiefung erfindungsgemäß bevorzugt.

Die der vorliegenden Erfindung zugrundeliegenden Aufgaben werden auch gelöst durch ein Set zur Durchführung eines erfindungsgemäßen Verfahrens aufweisend mehrere vorkonfektionierte Prothesenzähne und wenigstens eine erfindungsgemäße Vorrichtung.

Dabei kann vorgesehen sein, dass das Set zusätzlich den ersten Datensatz zur äußeren Form aller vorkonfektionierten Prothesenzähne und einen zweiten Datensatz zur Position der vorkonfektionierten Prothesenzähne in der zusammengesetzten Vorrichtung enthält, bevorzugt auf einem Datenträger.

Die Kombination des Sets mit dem Datensatz macht das Set vollständiger und für den Anwender leichter einsetzbar. Zudem wird hierdurch eine vollautomatisierte Nachbearbeitung der Prothesenzähne vereinfacht.

Der Erfindung liegt die überraschende Erkenntnis zugrunde, dass Prothesenzähne über eine an der Negativform zu befestigende Klemmeinrichtung mit Hilfe von elastischen Haltemitteln derart an der Negativform reversibel zu fixieren sind, dass die basalen Enden der Prothesenzähne frei zugänglich sind, so dass die basalen Enden der Prothesenzähne mit einer Fräse bearbeitet werden können. Die Vorrichtung, das Verfahren und das Set sind besonders gut zur Verwendung mit CAD/CAM-Verfahren geeignet, insbesondere mit CAM-gesteuerten beziehungsweise Computer-gesteuerten Fräsen. Die nachbearbeiteten Prothesenzähne können durch Lösen der Klemmeinrichtung nach der basalen Bearbeitung rückstandsfrei entfernt werden und stehen sofort zur Behandlung eines Patienten zur Verfügung. Die Befestigung der Prothesenzähne ist schnell und unkompliziert durchführbar. Die Klemmeinrichtung kann problemlos so aufgebaut werden, dass sie wiederverwendbar ist. Eine aufwendige Herstellung der Halterung, wie dies bei Wachshalterungen notwendig ist, entfällt bei der erfindungsgemäßen Vorrichtung und dem erfindungsgemäßen Verfahren.

Die Vorrichtung und die Klemmeinrichtung sind gegenüber äußeren Einflüssen wie Hitze oder Kälte stabil und es kommt nicht zum Verziehen oder zu Verformungen der Vorrichtung und damit nicht zu Positionsänderungen der Prothesenzähne innerhalb der Vorrichtung.

Der große Vorteil erfindungsgemäßer Verfahren liegt in der sehr schnellen und nahezu werkzeugfreien und hilfsmittellosen Umsetzung. Dadurch kann auf das Vorhalten größerer Lagermengen verzichtet werden und eine bestellbezogene Konfektionierung vorgenommen werden. Auch entfällt die sonst bei Wachs notwendige Reinigung mittels Ausbrühen oder Putzen der Prothesenzähne.

Auch in Bezug auf die Kosten ist das Verfahren sehr effizient, da je nach Grad des Beschleifens der Prothesenzähne eine Wiederverwendbarkeit der Klemmeinrichtung und der Negativform besteht.

Das Einbringen von Kontaktmitteln kann die Verbindung der Vorrichtung zu den Prothesenzähnen noch verbessern. Als beispielhaftes Kontaktmittel kann Polyvinylalkohol eingesetzt werden, das nach Abdampfen enthaltener Lösemittel eine haftende Verbindungsschicht bildet.

Die Erfindung kann beispielsweise vorsehen, dass die Prothesenzähne in der Vorrichtung fixiert bereitgestellt werden, so dass sie im CAM-Verfahren unmittelbar maschinell basal geschliffen werden können und somit der individuellen Situation des Patienten angepasst werden können.

Um diesen technischen Ansatz umsetzen zu können, müssen die konfektionierten Prothesenzähne in einer vordefinierten Position innerhalb der in die Maschine einspannbaren Vorrichtung positioniert und festgehalten werden. Die zusammengesetzte Vorrichtung kann unterschiedliche Formen haben (kubisch, rechteckig, rund, etc.) und ist zweckmäßigerweise an den Aufnahmemechanismus der jeweiligen CAM-Maschine angepasst. Hierzu kann erfindungsgemäß vorgesehen sein, dass an der Negativform und/oder an der Klemmeinrichtung beziehungsweise an wenigstens einem Teil der Klemmeinrichtung eine Halterung zur Befestigung in der CAM-Maschine vorgesehen ist. Die vorgefertigten konfektionierten Prothesenzähne werden dabei von der Klemmeinrichtung bevorzugt die Vertiefungen der Negativform gepresst. Die Prothesenzähne und die Klemmeinrichtung werden beim Entnehmen der Prothesenzähne nicht beschädigt und können gegebenenfalls wiederverwendet werden.

Die Prothesenzähne werden über die Negativform zur Aufnahme der koronalen Enden und die Klemmeinrichtung fixiert. Die Klemmeinrichtung wird seitlich an den Prothesenzähnen beziehungsweise an der seitlichen umlaufenden Oberfläche der Prothesenzähne zwischen dem basalen und dem koronalen Ende der Prothesenzähne, das heißt den Zahnhälsen der Prothesenzähne, positioniert und dann mit der Negativform und, sofern die Klemmeinrichtung mehrteilig ist, die Teile der Klemmeinrichtung gegeneinander fest verbunden (beispielsweise durch Verkleben, Verschrauben, Klick-Mechanismus, Retentionen, Nut und Feder oder Haltestifte oder durch Kombinationen hiervon). Dadurch werden die Prothesenzähne in definierter Position und Orientierung geklemmt beziehungsweise eingespannt. Optional kann die Positionierung der Klemmeinrichtung gegen die Negativform und/oder der Teile der Klemmenrichtung gegeneinander mit zusätzlichen Führungen, Passstiften oder Ähnlichem gegeneinander abgesichert werden.

Die Negativform und ein großer Teil der Klemmeinrichtung bestehen bevorzugt aus deformationsstabilem Material, zum Beispiel ein elastisches Kunststoffmaterial wie Polymethylmethacrylat (PMMA) oder Polyurethan (PU) oder andere Kunststoffe mit Füllstoffanteilen oder aus metallischen Werkstoffen. Die Negativform wird bevorzugt durch Frästechnik hergestellt, kann aber auch im Spritzguss oder Sinterverfahren hergestellt sein.

Im Folgenden werden Ausführungsbeispiele der Erfindung anhand von acht schematisch dargestellten Figuren erläutert, ohne jedoch dabei die Erfindung zu beschränken. Dabei zeigt:
- Figur 1:: eine schematische Querschnittansicht einer erfindungsgemäßen Vorrichtung;
- Figur 2:: eine schematische Querschnittansicht einer alternativen erfindungsgemäßen Vorrichtung;
- Figur 3:: eine schematische Querschnittansicht einer weiteren alternativen erfindungsgemäßen Vorrichtung;
- Figur 4:: eine schematische Aufsicht auf eine Negativform einer erfindungsgemäßen Vorrichtung;
- Figur 5:: eine schematische Aufsicht auf die Negativform nach Figur 4 mit vier eingesetzten Prothesenzähnen;
- Figur 6:: eine schematische perspektivische Ansicht auf die Negativform nach Figur 5 und einem an die Prothesenzähne angelegten ersten Teil einer Klemmeinrichtung einer erfindungsgemäßen Vorrichtung;
- Figur 7:: eine schematische perspektivische Ansicht die Negativform nach Figur 5 mit einer kompletten, an die Prothesenzähne angelegten Klemmeinrichtung einer erfindungsgemäßen Vorrichtung; und
- Figur 8:: eine schematische perspektivische Ansicht auf eine weitere erfindungsgemäße Vorrichtung, bei der die Prothesenzähne basal mit einer computergesteuerten Fräse bearbeitet werden.

In den Figuren werden auch bei unterschiedlichen Ausführungen für gleichartige Teile teilweise die gleichen Bezugszeichen verwendet.

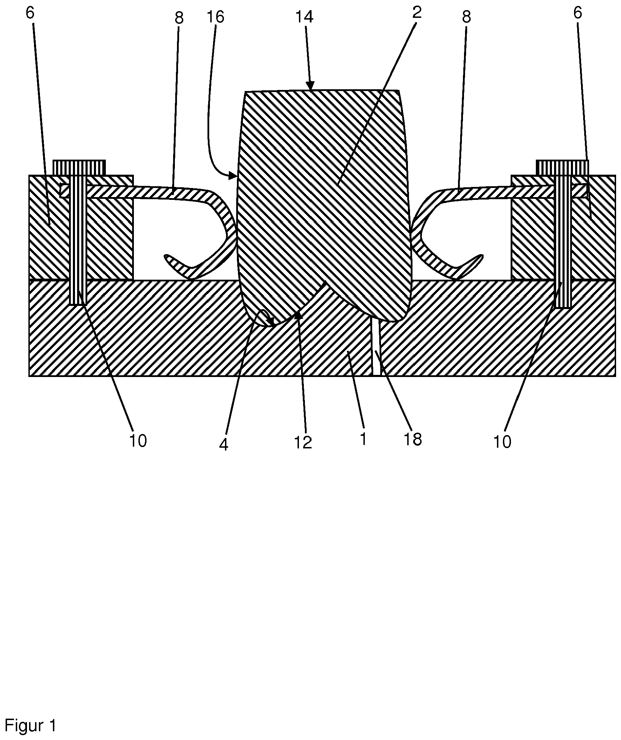

Figur 1 zeigt eine schematische Querschnittansicht einer erfindungsgemäßen Vorrichtung, wobei geschnittene Flächen schraffiert dargestellt sind. Die Vorrichtung weist bodenseitig (in Figur 1 unten) eine Negativform 1 in Form einer Platte auf, in der mehrere Prothesenzähne 2 (von denen in der Querschnittansicht nach Figur 1 nur einer zu erkennen ist) angeordnet sind. Die Prothesenzähne 2 sind in passende Vertiefungen 4 in der Negativform 1 eingesetzt. Die Negativform 1 besteht aus einem formstabilen Material, wie beispielsweise einem nicht zu weichen Metall, wie Messing oder Stahl, nicht aber Blei, oder aus einem harten Kunststoff wie PMMA.

Die Prothesenzähne 2 werden seitlich von einer Klemmeinrichtung 6 gehalten, die mehrere Spangen 8 aus Federstahl aufweist, die in Richtung der Prothesenzähne 2 ausgerichtet sind und gegen die Richtung der Prothesenzähne 2 gespannt sind. Die Klemmeinrichtung 6 besteht bis auf die Spangen 8 aus einem festen, harten Kunststoff, wie beispielsweise PMMA. An den zu den Prothesenzähnen 2 weisenden Oberflächen der Spangen 8 ist eine Kunststoffbeschichtung vorgesehen, um eine Beschädigung der Prothesenzähne 2 zu vermeiden. Mit Hilfe von Schrauben 10 ist die Klemmeinrichtung 6 an der Negativform 1 befestigt. Dazu sind in der Negativform 1 Gewindebohrungen vorgesehen, in die die Schrauben 10 eingeschraubt sind. Es können zusätzlich Führungselemente (nicht gezeigt) vorgesehen sein, die die korrekte Positionierung der Klemmeinrichtung 6 auf der Negativform 1 gewährleisten. Als Führungselemente können beispielsweise Schienen, Nuten und Federn und/oder Löcher und Stifte verwendet werden, die an der Negativform 1 und der Klemmeinrichtung 6 angeordnet sind.

Die Prothesenzähne 2 weisen eine koronale Seite 12 (in Figur 1 unten), eine basale Seite 14 (in Figur 1 oben) und einen umlaufenden Zahnhals 16 zwischen der koronalen Seite 12 und der basalen Seite 14 der Prothesenzähne 2 auf.

Die Vertiefungen 4 bilden ein Negativ der koronalen Seiten 12 der Prothesenzähne 2, so dass die Prothesenzähne 2 mit der koronalen Seite 12 flächenbündig in die Vertiefungen 4 eingesetzt werden können. Zusätzlich zu einem leichten Halt ist so die Position der sich untereinander unterscheidenden Prothesenzähne 2 eindeutig vorgegeben. In der Vertiefung 4 ist eine Bohrung 18 vorgesehen, durch die ein Unterdruck in der Vertiefung 4 erzeugt werden kann, so dass der Prothesenzahn 2 in die Vertiefung 4 gesaugt wird und dadurch dort gehalten wird, bis die Klemmeinrichtung 6 an der Negativform 1 befestigt ist.

Die Spangen 8 sind derart in der Klemmeinrichtung 6 positioniert, dass sie durch die Prothesenzähne 2 elastisch verformt sind. Dadurch wird eine elastische Kraft auf die Prothesenzähne 2 ausgeübt, die die Prothesenzähne 2 auf der Negativform 4 und in der Klemmeinrichtung 6 fixiert. Die Lage und Ausrichtung der Prothesenzähne 2 wird dabei durch die eindeutige Form der Vertiefungen 4 vorgegeben. Die Spangen 8 üben dabei eine derartige elastische Kraft auf die Prothesenzähne 2 aus, dass die Prothesenzähne 2 in die Vertiefungen 4 hinein gedrückt werden. Die Spangen 8 können beispielsweise durch Metallbänder aus Federstahl geformt werden, die im Kunststoffkörper der Klemmeinrichtung 6 verankert oder eingegossen oder eingesteckt sind.

Sobald die Prothesenzähne 2 mit der Klemmeinrichtung 6 fixiert sind, kann der Unterdruck an der Bohrung 18 entfernt werden, das heißt, die Unterdruckquelle getrennt werden. Die Vorrichtung mit den fixierten Prothesenzähnen 2 wird anschließend in eine computergesteuerte Fräsmaschine (nicht gezeigt) eingesetzt und die Prothesenzähne 2 werden auf der basalen Seite 14 mit der Fräse bearbeitet. Bei bekannter Form der Vorrichtung und bei bekannten vorkonfektionierten Prothesenzähnen 2 kann deren Form, Position und Lage als Datensatz verwendet werden, auf dessen Basis mit einem CAM-Programm im Computer nach bekannten Verfahren berechnet wird, an welchen Stellen basal Material von den Prothesenzähnen 2 entfernt werden muss. Die Stabilisierung und Fixierung der Prothesenzähne 2 mit der Vorrichtung ist so stabil, dass eine basale Bearbeitung der Prothesenzähne 2 mit einer Fräse möglich ist, ohne dass sich die Position und die Lage der Prothesenzähne 2 in der Vorrichtung aufgrund der mechanischen Belastung ändert.

Nach der Bearbeitung der Prothesenzähne 2 können diese durch Lösen der Klemmeinrichtung 6 von der Negativform 1, das heißt durch entfernen der Schrauben 10 einfach aus der Negativform 1 entfernt werden und in eine Prothesenbasis (nicht gezeigt) zur Herstellung einer Dentalprothese eingeklebt werden.

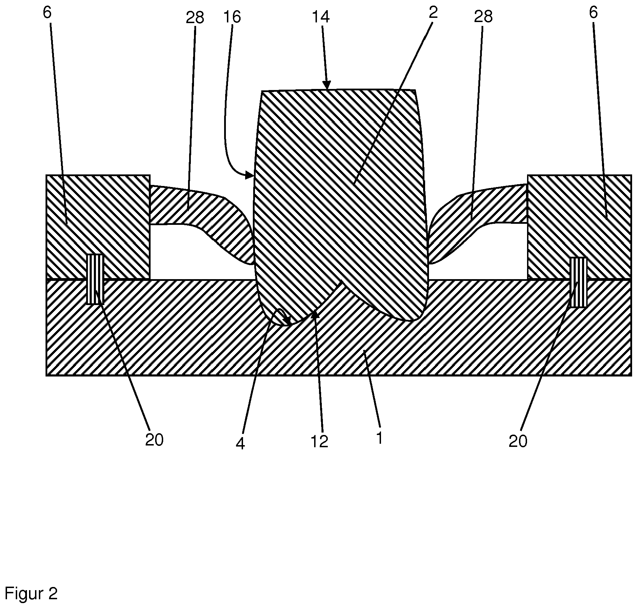

Figur 2 zeigt eine schematische Querschnittansicht einer alternativen erfindungsgemäßen Vorrichtung, wobei geschnittene Flächen schraffiert dargestellt sind. Die Vorrichtung weist bodenseitig (in Figur 2 unten) eine Negativform 1 in Form einer Platte auf, in der mehrere Prothesenzähne 2 (von denen in der Querschnittansicht nach Figur 2 nur einer zu erkennen ist) angeordnet sind. Die Prothesenzähne 2 sind in passende Vertiefungen 4 in der Negativform 1 eingesetzt. Die Negativform 1 besteht aus einem formstabilen Material, wie beispielsweise einem nicht zu weichen Metall, wie Messing oder Stahl, nicht aber Blei, oder aus einem harten Kunststoff wie PMMA.

Die Prothesenzähne 2 werden seitlich von einer Klemmeinrichtung 6 gehalten, die mehrere Kunststoffspanner 28 aus einem elastischen, weichen Kunststoff aufweist, die in Richtung der Prothesenzähne 2 ausgerichtet sind und gegen die Richtung der Prothesenzähne 2 gespannt beziehungsweise komprimiert sind. Die Klemmeinrichtung 6 besteht aus einem festen, harten Kunststoff, wie beispielsweise PMMA. Mit Hilfe von Stiften 20 ist die Klemmeinrichtung 6 an der Negativform 1 befestigt. Dazu sind in der Negativform 1 und der Klemmeinrichtung 6 Bohrungen vorgesehen, in die die Stifte 20 eingesteckt sind. Es können zusätzlich Führungselemente (nicht gezeigt) vorgesehen sein, die die korrekte Positionierung der Klemmeinrichtung 6 auf der Negativform 1 gewährleisten. Als Führungselemente können beispielsweise Schienen, Nuten und Federn und/oder Löcher und weitere Stifte verwendet werden, die an der Negativform 1 und der Klemmeinrichtung 6 angeordnet sind.

Die Prothesenzähne 2 weisen eine koronale Seite 12 (in Figur 1 unten), eine basale Seite 14 (in Figur 1 oben) und einen umlaufenden Zahnhals 16 zwischen der koronalen Seite 12 und der basalen Seite 14 der Prothesenzähne 2 auf.

Die Vertiefungen 4 bilden ein Negativ der koronalen Seiten 12 der Prothesenzähne 2, so dass die Prothesenzähne 2 mit der koronalen Seite 12 flächenbündig in die Vertiefungen 4 eingesetzt werden können. Zusätzlich zu einem leichten Halt ist so die Position der sich untereinander unterscheidenden Prothesenzähne 2 eindeutig vorgegeben. In der Vertiefung 4 kann eine Bohrung (nicht gezeigt) oder eine Mehrzahl von Durchgängen (nicht gezeigt) vorgesehen sein, durch die ein Unterdruck in der Vertiefung 4 erzeugt werden kann, so dass der Prothesenzahn 2 in die Vertiefung 4 gesaugt wird und dadurch dort gehalten wird, bis die Klemmeinrichtung 6 an der Negativform 1 befestigt ist. Alternativ kann die Negativform 1 auch zwischen den Vertiefungen 4 und der Unterseite durchgehend porös sein, so dass ein bodenseitiger Unterdruck sich bis in die Vertiefungen 4 auswirkt.

Die Kunststoffspanner 28 sind derart in der Klemmeinrichtung 6 positioniert, dass sie durch die Prothesenzähne 2 elastisch verformt sind. Dadurch wird eine elastische Kraft auf die Prothesenzähne 2 ausgeübt, die die Prothesenzähne 2 auf der Negativform 4 und in der Klemmeinrichtung 6 fixiert. Die Lage und Ausrichtung der Prothesenzähne 2 wird dabei durch die eindeutige Form der Vertiefungen 4 vorgegeben. Die Kunststoffspanner 28 üben dabei eine derartige elastische Kraft auf die Prothesenzähne 2 aus, dass die Prothesenzähne 2 in die Vertiefungen 4 hinein gedrückt werden. Die Kunststoffspanner 28 können beispielsweise aus einem gummielastischen Kunststoff bestehen und im härteren Kunststoffkörper der Klemmeinrichtung 6 verankert, eingeklebt, eingegossen oder eingesteckt sein.

Die Klemmeinrichtung 6 und die Kunststoffspanner 28 können beispielsweise im 3D-Druckverfahren hergestellt werden. Die Klemmeinrichtung 6 und die Kunststoffspanner 28 können dabei auch aus dem gleichen Material aufgebaut werden, wobei die Klemmeinrichtung 6 massiv und die Kunststoffspanner 28 mit einer Gitterstruktur oder leicht porös gedruckt werden kann, so dass die Kunststoffspanner 28 hierdurch elastischer werden als die Klemmeinrichtung 6.

Sobald die Prothesenzähne 2 mit der Klemmeinrichtung 6 fixiert sind, kann gegebenenfalls der Unterdruck an der Bohrung oder den Durchgängen an der Unterseite der Negativform 1 entfernt werden, das heißt, die Unterdruckquelle getrennt werden. Die Vorrichtung mit den fixierten Prothesenzähnen 2 wird anschließend in eine computergesteuerte Fräsmaschine (nicht gezeigt) eingesetzt und die Prothesenzähne 2 werden auf der basalen Seite 14 mit der Fräse bearbeitet. Bei bekannter Form der Vorrichtung und bei bekannten vorkonfektionierten Prothesenzähnen 2 kann deren Form, Position und Lage als Datensatz verwendet werden, auf dessen Basis mit einem CAM-Programm im Computer nach bekannten Verfahren berechnet wird, an welchen Stellen basal Material von den Prothesenzähnen 2 entfernt werden muss. Die Stabilisierung und Fixierung der Prothesenzähne 2 mit der Vorrichtung ist so stabil, dass eine basale Bearbeitung der Prothesenzähne 2 mit einer Fräse möglich ist, ohne dass sich die Position und die Lage der Prothesenzähne 2 in der Vorrichtung aufgrund der mechanischen Belastung ändert.

Nach der Bearbeitung der Prothesenzähne 2 können diese durch Lösen der Klemmeinrichtung 6 von der Negativform 1, das heißt durch abziehen der Klemmeinrichtung 6 von den Stiften 20, einfach aus der Negativform 1 entfernt werden und in eine Prothesenbasis (nicht gezeigt) zur Herstellung einer Dentalprothese eingeklebt werden.

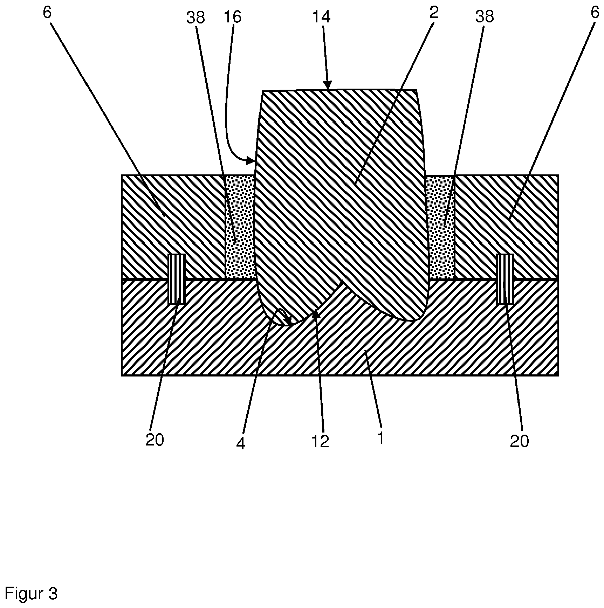

Figur 3 zeigt eine schematische Querschnittansicht einer weiteren alternativen erfindungsgemäßen Vorrichtung, wobei geschnittene Flächen schraffiert dargestellt sind. Die Vorrichtung weist bodenseitig (in Figur 3 unten) eine Negativform 1 in Form einer Platte auf, in der mehrere Prothesenzähne 2 (von denen in der Querschnittansicht nach Figur 3 nur einer zu erkennen ist) angeordnet sind. Die Prothesenzähne 2 sind in passende Vertiefungen 4 in der Negativform 1 eingesetzt. Die Negativform 1 besteht aus einem formstabilen Material, wie beispielsweise einem nicht zu weichen Metall, wie Messing oder Stahl, nicht aber Blei, oder aus einem harten Kunststoff wie PMMA.

Die Prothesenzähne 2 werden seitlich von einer Klemmeinrichtung 6 gehalten, die mehrere weiche Kunststoffeinlagen 38 aus einem elastischen, weichen Kunststoff, wie beispielsweise einem porösen oder schaumartigen Schwamm, aufweist und die in Richtung der Prothesenzähne 2 ausgerichtet sind und gegen die Richtung der Prothesenzähne 2 gespannt beziehungsweise komprimiert sind. Die Klemmeinrichtung 6 besteht aus einem festen, harten Kunststoff, wie beispielsweise PMMA. Mit Hilfe von Stiften 20 ist die Klemmeinrichtung 6 an der Negativform 1 befestigt. Dazu sind in der Negativform 1 Bohrungen vorgesehen, in die die an der Klemmeinrichtung 6 befestigten Stifte 20 eingesteckt sind. Es können zusätzlich Führungselemente (nicht gezeigt) vorgesehen sein, die die korrekte Positionierung der Klemmeinrichtung 6 auf der Negativform 1 gewährleisten. Als Führungselemente können beispielsweise Schienen, Nuten und Federn und/oder Löcher und weitere Stifte verwendet werden, die an der Negativform 1 und der Klemmeinrichtung 6 angeordnet sind.

Die Prothesenzähne 2 weisen eine koronale Seite 12 (in Figur 1 unten), eine basale Seite 14 (in Figur 1 oben) und einen umlaufenden Zahnhals 16 zwischen der koronalen Seite 12 und der basalen Seite 14 der Prothesenzähne 2 auf.

Die Vertiefungen 4 bilden ein Negativ der koronalen Seiten 12 der Prothesenzähne 2, so dass die Prothesenzähne 2 mit der koronalen Seite 12 flächenbündig in die Vertiefungen 4 eingesetzt werden können. Zusätzlich zu einem leichten Halt ist so die Position der sich untereinander unterscheidenden Prothesenzähne 2 eindeutig vorgegeben. In der Vertiefung 4 kann eine Bohrung (nicht gezeigt) oder eine Mehrzahl von Durchgängen (nicht gezeigt) vorgesehen sein, durch die ein Unterdruck in der Vertiefung 4 erzeugt werden kann, so dass der Prothesenzahn 2 in die Vertiefung 4 gesaugt wird und dadurch dort gehalten wird, bis die Klemmeinrichtung 6 an der Negativform 1 befestigt ist. Alternativ kann die Negativform 1 auch zwischen den Vertiefungen 4 und der Unterseite durchgehend porös sein, so dass ein bodenseitiger Unterdruck sich bis in die Vertiefungen 4 auswirkt.

Die Kunststoffeinlagen 38 sind derart in der Klemmeinrichtung 6 positioniert, dass sie durch die Prothesenzähne 2 elastisch verformt sind. Dadurch wird eine elastische Kraft auf die Prothesenzähne 2 ausgeübt, die die Prothesenzähne 2 auf der Negativform 4 und in der Klemmeinrichtung 6 fixiert. Die Lage und Ausrichtung der Prothesenzähne 2 wird dabei durch die eindeutige Form der Vertiefungen 4 vorgegeben. Die Kunststoffeinlagen 38 können oben (in Figur 3 oben) härter sein als unten, damit sie eine derartige elastische Kraft auf die Prothesenzähne 2 ausüben, dass die Prothesenzähne 2 in die Vertiefungen 4 hinein gedrückt werden. Hierzu kann die Kunststoffeinlage 38 auch oben dünner ausgeführt sein als unten. Die Kunststoffeinlagen 38 können beispielsweise aus einem gummielastischen Kunststoff oder einem Schaumgummi bestehen und im härteren Kunststoffkörper der Klemmeinrichtung 6 eingeklebt sein.

Die Klemmeinrichtung 6 und die Kunststoffeinlage 38 können beispielsweise im 3D-Druckverfahren hergestellt werden. Die Klemmeinrichtung 6 und die Kunststoffeinlage 38 können dabei auch aus dem gleichen Material aufgebaut werden, wobei die Klemmeinrichtung 6 massiv und die Kunststoffeinlage 38 mit einer Gitterstruktur gedruckt werden kann, so dass die Kunststoffeinlage 38 hierdurch elastischer wird als die Klemmeinrichtung 6.

Um eine hohe Klemmkraft der Kunststoffeinlagen 38 zu erreichen, kann außen an der Klemmeinrichtung 6 (in Figur 3 rechts und links von der Klemmeinrichtung 6) eine Klammer oder eine Schraubzwinge (nicht gezeigt) angeordnet sein, mit der die Klemmeinrichtung 6 zusammengepresst wird. Dazu können der linke und der rechte Teil der Klemmeinrichtung 6 anstatt durch die Stifte 20 befestigt zu sein, auf Schienen mit der Negativform 1 beweglich verbunden sein. Die Klammer oder die Schraubzwinge kann dabei zusätzlich verwendet werden, um die Klemmeinrichtung 6 an der Negativform 1 zu befestigen.

Sobald die Prothesenzähne 2 mit der Klemmeinrichtung 6 fixiert sind, kann gegebenenfalls der Unterdruck an der Bohrung oder den Durchgängen an der Unterseite der Negativform 1 entfernt werden, das heißt, die Unterdruckquelle getrennt werden. Die Vorrichtung mit den fixierten Prothesenzähnen 2 wird anschließend in eine computergesteuerte Fräsmaschine (nicht gezeigt) eingesetzt und die Prothesenzähne 2 werden auf der basalen Seite 14 mit der Fräse bearbeitet. Bei bekannter Form der Vorrichtung und bei bekannten vorkonfektionierten Prothesenzähnen 2 kann deren Form, Position und Lage als Datensatz verwendet werden, auf dessen Basis mit einem CAM-Programm im Computer nach bekannten Verfahren berechnet wird, an welchen Stellen basal Material von den Prothesenzähnen 2 entfernt werden muss. Die Stabilisierung und Fixierung der Prothesenzähne 2 mit der Vorrichtung ist so stabil, dass eine basale Bearbeitung der Prothesenzähne 2 mit einer Fräse möglich ist, ohne dass sich die Position und die Lage der Prothesenzähne 2 in der Vorrichtung aufgrund der mechanischen Belastung ändert.

Nach der Bearbeitung der Prothesenzähne 2 können diese durch Lösen der Klemmeinrichtung 6 von der Negativform 1, das heißt durch abziehen der Klemmeinrichtung 6 von den Stiften 20, einfach aus der Negativform 1 entfernt werden und in eine Prothesenbasis (nicht gezeigt) zur Herstellung einer Dentalprothese eingeklebt werden.

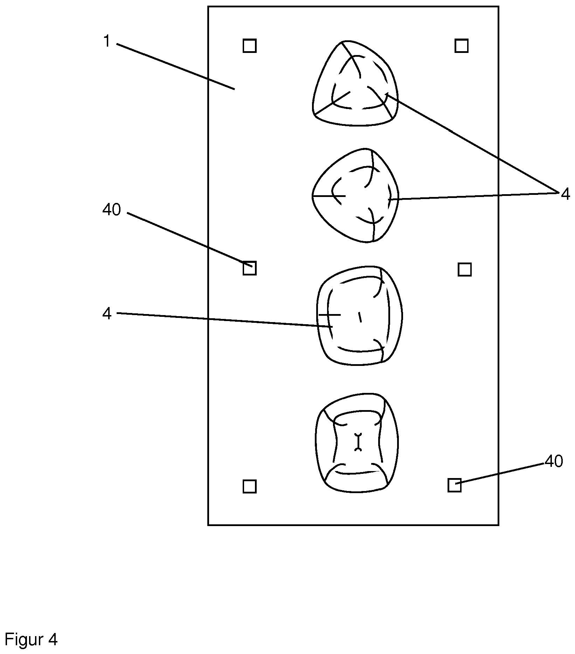

Figur 4 zeigt eine schematische Aufsicht auf eine Negativform 1 einer erfindungsgemäßen Vorrichtung zur Halterung von Prothesenzähnen und zur Umsetzung eines erfindungsgemäßen Verfahrens. Die Abfolge beispielhafter erfindungsgemäßer Verfahrensschritte ist in den Figuren 4 bis 7 dargestellt.

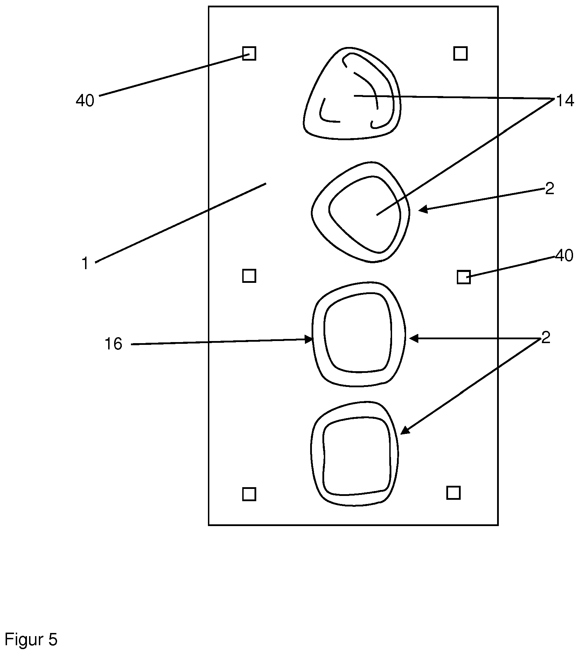

Die Negativform 1 kann beispielsweise aus einem einfachen harten Kunststoff oder aus Metall, wie Stahl oder Messing, bestehen. In der Negativform 1 sind vier Vertiefungen 4 zur Positionierung von Prothesenzähnen 2 (in Figur 4 nicht gezeigt, aber in den Figuren 5 bis 7 gezeigt) dargestellt. Die Vertiefungen 4 stellen ein Negativ der Außenform von vier koronalen Enden von Prothesenzähnen 2 dar, so dass die Prothesenzähne 2 koronal eindeutig und korrekt orientiert in die Vertiefungen 4 eingesetzt werden können und müssen. Alternativ zu den gezeigten vier Vertiefungen 4 können bevorzugt auch zusätzliche und weitere verschiedene Vertiefungen 4 für unterschiedliche Prothesenzähne 2 unterschiedlicher Zahntypen vorgesehen sein. Erfindungsgemäß bevorzugt hat die Negativform 1 achtundzwanzig Vertiefungen 4 und zwar in der Art, dass eine komplette Bezahnung mit Prothesenzähnen 2 für ein vollständiges Gebiss in die Negativform 1 eingesetzt werden kann. Als nächstes werden bei der in Figur 4 gezeigten Ausführungsform vier verschiedene Prothesenzähne 2 in die Vertiefungen 4 eingesetzt.

Figur 5 zeigt eine schematische Aufsicht auf die Negativform 1 einer erfindungsgemäßen Vorrichtung mit vier eingesetzten Prothesenzähnen 2. Die Prothesenzähne 2 können nur in einer bestimmten Position und einer bestimmten Orientierung in die Vertiefungen 4 eingesetzt werden. Die Prothesenzähne 2 sind nur lose in die Negativform 1 eingesetzt. Es kann aber auch vorgesehen sein, dass die Prothesenzähne 2 mit einem Haftvermittler in den Vertiefungen 4 angehaftet werden oder durch eine geeignete Form der Vertiefungen 4 in einer leichten Presspassung in den Vertiefungen 4 halten oder durch einen Unterdruck, wie bei der Ausführung nach Figur 1, in die Vertiefungen 4 eingesaugt werden. Die basalen Seiten 14 der Prothesenzähne 2 liegen bei dieser Anordnung frei. Dazu sind die Prothesenzähne 2 mit der koronalen Seite 12 in die jeweilige dazu passende Vertiefung 4 eingesetzt worden.

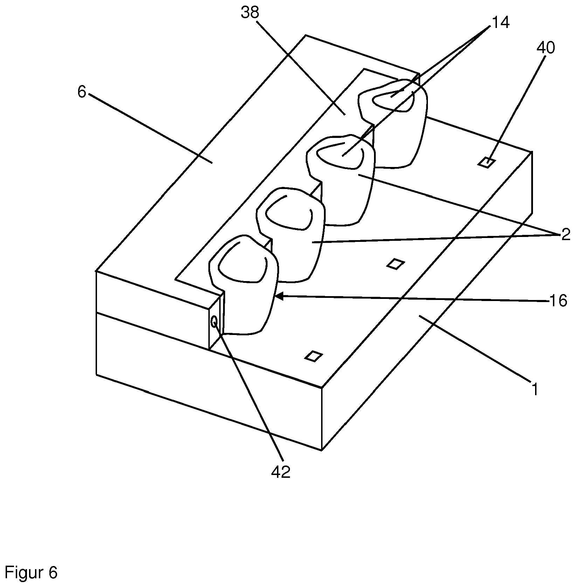

Als nächstes wird ein erster Teil einer Klemmeinrichtung 6 mit einer Kunststoffeinlage 38 aus einem Material mit einem ausreichend hohen Elastizitätsmodul (beispielsweise über 1 GPa) und mit vier, grob zu den Außenformen der Zahnhälse 16 der in der Negativform 1 positionierten Prothesenzähne 2 passenden, halbrunden Ausnehmungen auf die Negativform 1 aufgesteckt und an die Prothesenzähne 2 angelegt. Figur 6 zeigt eine schematische perspektivische Ansicht des auf der Negativform 1 und an Prothesenzähne 2 angelegten ersten Teils der Klemmeinrichtung 6 einer erfindungsgemäßen Vorrichtung.

Die Klemmeinrichtung 6 ist mit der Negativform 1 über drei Stifte (in den Figuren 4 bis 7 nicht zu sehen) verbunden, die in die drei linken Nuten 40 (in Figur 4 und 5 auf der linken Seite) in die Negativform 1 eingesteckt werden. Die Stifte sind fest mit der Unterseite der Klemmeinrichtung 6 verbunden. Die inneren Oberflächen der Ausnehmungen in der Kunststoffeinlage 38 sind kleiner als die Außenformen der Prothesenzähne 2 in einem mittleren Bereich, der in einer Höhe der Prothesenzähne 2 beginnt, die aus den Vertiefungen 4 der Negativform 1 herausragt, also an den Zahnhälsen 16. Durch den im Vergleich zu der Ausdehnung der Prothesenzähne 2 an den Zahnhälsen 16 kleineren Ausnehmung in der Kunststoffeinlage 38 der Klemmeinrichtung 6 wird erreicht, dass die Kunststoffeinlage 38 komprimiert ist (wie in Figur 6 gezeigt) und dadurch eine elastische Kraft auf die eingesetzten Prothesenzähne 2 ausübt.

Die inneren Oberflächen der vier Ausnehmungen in der Kunststoffeinlage 38 und die Form der Vertiefungen 4 kann mit einem CAD/CAM-Verfahren erzeugt werden, indem die zur Herstellung der Prothesenzähne 2 verwendeten Formen als Datensatz verwendet oder zuvor eingelesen oder eingescannt werden. An der Verbindungsfläche zur einem zweiten Teil der Klemmvorrichtung 6 (in Figur 6 nicht zu sehen) sind Klickmechanismen 42 oder Rastverbindungen 42 vorgesehen, die zu entsprechenden Gegenstücken an der Verbindungsfläche des zweiten Teils der Klemmvorrichtung 6 passen. Als nächster Verfahrensschritt wird also der zweite Teil der Klemmvorrichtung 6 angelegt.

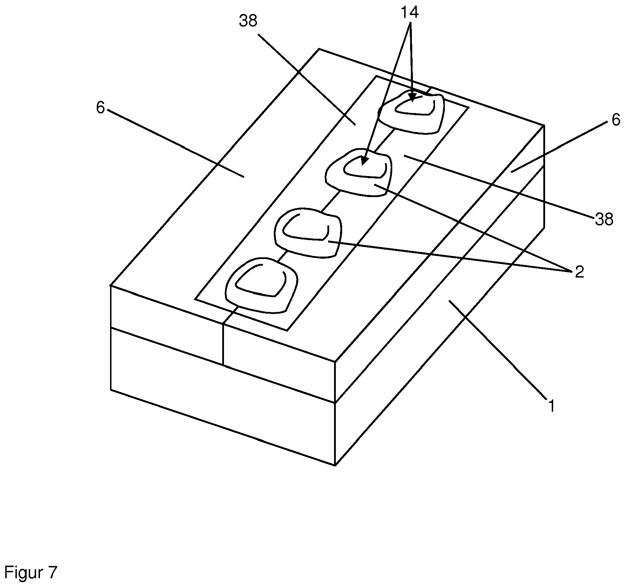

Figur 7 zeigt eine schematische perspektivische Ansicht der auf der Negativform 1 und an die vier Prothesenzähne 2 angelegten zweiteiligen Klemmeinrichtung 6 einer erfindungsgemäßen Vorrichtung. Der zweite Teil der Klemmeinrichtung 6 ist, eventuell bis auf die Ausnehmungen in der Kunststoffeinlage 38, spiegelbildlich zu dem ersten Teil der Klemmeinrichtung 6 ausgestaltet. Die beiden Teile der Klemmeinrichtung 6 sind über die Klickmechanismen 42 oder Rastverbindungen 42 miteinander verbunden. Ohne besondere Nachteile könnte die Klemmeinrichtung 6 auch mehrfach in eine größere Anzahl von Teilen unterteilt sein. Es wäre beispielsweise auch möglich für jeden Prothesenzahn 2 jeweils zwei Teile der Klemmeinrichtung 6 vorzusehen und die verschiedenen Teile seitlich miteinander verbindbar zu gestalten. Ein solches System hat den Vorteil, dass immer nur die gewünschten Prothesenzähne 2 eingespannt werden müssen. Ein solches System stellt eine besonders variable Weiterentwicklung der vorliegenden Erfindung dar. Die Ausnehmungen der Kunststoffeinlage 38 des zweiten Teils der Klemmeinrichtung 6 wird auf der Negativform 1 an den Prothesenzähnen 2 angelegt. Genau wie bei dem ersten Teil der Klemmeinrichtung 6 weist der zweite Teil in der Kunststoffeinlage 38 für die Prothesenzähne 2 Ausnehmungen auf, die die Prothesenzähne 2 in einem mittleren Bereich halbseitig umschließen und dort flächenbündig anliegen, so dass die Kunststoffeinlage 38 komprimiert wird und eine elastische Kraft auf die Prothesenzähne 2 ausübt.

Auch der zweite Teil der Klemmeinrichtung 6 ist mit der Negativform 1 über drei Stifte (in den Figuren 4 bis 7 nicht zu sehen) verbunden, die in die drei rechten Nuten 40 (in Figur 4 bis 6 auf der rechten Seite) in die Negativform 1 eingesteckt werden. Die Stifte sind fest mit der Unterseite der Klemmeinrichtung 6 verbunden.

Theoretisch ist es ausreichend, wenn nur Teilbereiche der Innenflächen der Ausnehmungen der Kunststoffeinlage 38 oder einem anderen elastischen Haltemittel, wie einer Metallspange 8 nach Figur 1 oder einem Kunststoffspanner 28 nach Figur 2, in der Klemmeinrichtung 6 an den Prothesenzähnen 2 anliegen.

Bevorzugt aus wenigstens drei Richtungen sollten die Haltemittel 8, 28, 38 in diesem Fall auf die Prothesenzähne 2 pressen, damit diese stabil gehalten werden und sich nicht um eine Achse in der Ebene der Haltemittel 8, 28, 38 drehen können.

Es ist jedoch erfindungsgemäß bevorzugt, wenn die Ausnehmungen der Kunststoffeinlage 38 der Vorrichtung vollumfänglich, flächig und formschlüssig an den Prothesenzähnen 2 anliegen, da dadurch einerseits ein stabiler Halt der Prothesenzähne 2 in der Vorrichtung sichergestellt ist und andererseits die Gefahr einer Verformung oder Beschädigung der Prothesenzähne 2 durch die Klemmeinrichtung 6 vermieden werden kann. Je höher der Elastizitätsmodul des Materials für die Klemmeinrichtung 6 gewählt werden kann, desto genauer sind die Prothesenzähne 2 auch während der Bearbeitung positioniert und orientiert.

Nach der Fixierung der Prothesenzähne 2 im Mittelbereich zwischen dem basalen Ende 14 und dem koronalen Ende 12 der Prothesenzähne 2 durch die Klemmeinrichtung 6 wird die Vorrichtung in eine computergesteuerte Fräse eingesetzt.

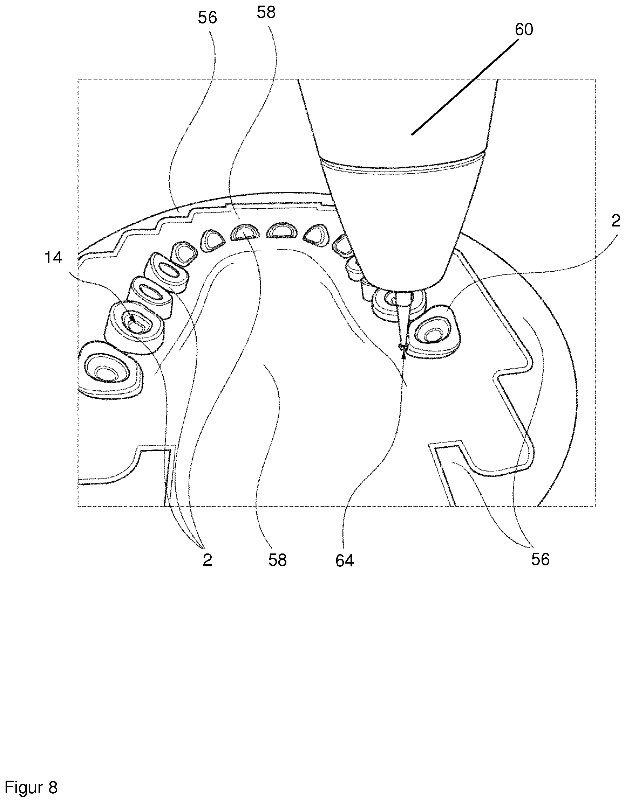

Figur 8 zeigt eine schematische perspektivische Ansicht auf eine weitere erfindungsgemäße Vorrichtung, bei der die Prothesenzähne 2 auf der basalen Seite 14 mit einer computergesteuerten Fräse 60 bearbeitet werden. Die Vorrichtung umfasst eine einteilige Klemmeinrichtung 56 und eine Negativform (in Figur 8 nicht zu sehen), die auf der Unterseite der Klemmeinrichtung 56 befestigt ist.

Im Inneren der Klemmeinrichtung 56 befindet sich eine Kunststoffeinlage 58, die über die in Vertiefungen der Negativform positionierten Prothesenzähnen 2 gesteckt beziehungsweise gestülpt wird. Dadurch werden die Prothesenzähne 2 mit ihrer koronalen Seite in die Vertiefungen der Negativform gepresst und in der Vorrichtung fixiert. Die Vorrichtung wird in eine Fräshalterung einer computergesteuerten Fräse 60 eingespannt und vollautomatisch mit einem Fräskopf 64 abgefräst. Hierzu werden die bekannten Abmessungen der Prothesenzähne 2 und der Negativform relativ zur Halterung der Fräse 60 sowie die bekannten Positionen der Prothesenzähne 2 als Datensatz dem Computer zur Steuerung des CAM-Vorgangs also zur Steuerung der Fräsmaschine 60 beziehungsweise der Fräskopfs 64 zur Verfügung gestellt und bei der Steuerung der Fräsmaschine 60 beziehungsweise der Fräskopfs 64 rechnerisch berücksichtigt.

Die Prothesenzähne 2 können dadurch vollautomatisch auf den basalen Seiten 14 eingekürzt werden. Nach dem basalen Beschleifen der Prothesenzähne 2 können diese aus der Vorrichtung entnommen werden und in passende Aufnahmen einer Prothesenbasis (nicht gezeigt) eingeklebt werden, um ein fertiges Gebiss herzustellen.

Neben den Daten zu den Prothesenzähnen 2 und der Vorrichtung kann die Bearbeitung der Prothesenzähne 2 anhand von zuvor im Mundraum eines Patienten aufgenommenen Daten erfolgen, um die Prothesenzähne 2 an die Mundraumsituation anzupassen. Für einen guten Sitz werden die Prothesenzähne 2 dazu basal bearbeitet. Solche Verfahren sind bekannt und für Details hierzu sei auf die WO 2011/066 895 A1 verwiesen.

Nach der Bearbeitung der Prothesenzähne 2 wird die Vorrichtung wieder aus der Fräsmaschine 60 entnommen und die Klemmeinrichtung 56 wird von der Negativform getrennt. Die Prothesenzähne 1 liegen dann vereinzelt vor und können in die Prothesenbasis eingesetzt werden.

Die in der voranstehenden Beschreibung, sowie den Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein. Es versteht sich, dass die Vorrichtung für die gezeigten Anzahlen von Prothesenzähnen 2 neben den gezeigten Ausführungsbeispielen mit vier und vierzehn Prothesenzähnen 2 ohne weiteres auf andere geradzahlige und ungeradzahlige Mengen von Prothesenzähnen 2 übertragbar sind, wobei der volle Satz von achtundzwanzig Prothesenzähnen 2 erfindungsgemäß bevorzugt ist. Der Schutzumfang der Erfindung ist durch die Ansprüche bestimmt.

### Bezugszeichenliste

- 1: Negativform
- 2: Prothesenzahn
- 4: Vertiefung als Negativ der koronalen Prothesenzahnform
- 6: Klemmeinrichtung
- 8: Haltemittel / Spange
- 10: Schraube
- 12: Koronale Seite des Prothesenzahns
- 14: Basale Seite des Prothesenzahns
- 16: Zahnhals
- 18: Bohrung
- 20: Stift
- 28: Haltemittel / Kunststoffspanner
- 38: Haltemittel / Kunststoffeinlage
- 40: Nut
- 42: Klickmechanismus / Rastung
- 56: Klemmeinrichtung
- 58: Haltemittel / Kunststoffeinlage
- 60: Computergesteuerte Fräsmaschine
- 64: Fräskopf

## Patentansprüche

1. Vorrichtung zur Halterung von Prothesenzähnen (2), die Vorrichtung aufweisend eine Negativform (1) und zumindest eine Klemmeinrichtung (6, 56), wobei
in der Negativform (1) Vertiefungen (4) zur Aufnahme von koronalen Seiten (12) der Prothesenzähne (2) vorgesehen sind, wobei die Vertiefungen (4) derart geformt sind, dass die Prothesenzähne (2) in einer eindeutigen Lage und Orientierung in die Vertiefungen (4) einzusetzen sind, wobei die zumindest eine Klemmeinrichtung (6, 56) mit einem Verbindungsmittel (10, 20, 40) an der Negativform (1) lösbar zu befestigen ist oder befestigt ist und wobei die zumindest eine Klemmeinrichtung (6, 56) zumindest ein elastisches Haltemittel (8, 28, 38, 58) aufweist, wobei mit dem zumindest einen elastischen Haltemittel (8, 28, 38, 58) eine elastische Kraft aus zumindest zwei unterschiedlichen Richtungen auf in die Negativform (1) eingesetzte Prothesenzähne (2) auszuüben ist oder ausgeübt wird, während die zumindest eine Klemmeinrichtung (6, 56) an der Negativform (1) befestigt ist, so dass die Prothesenzähne (2) in der Vorrichtung fixiert sind.

2. Vorrichtung nach Anspruch 1, **dadurch gekennzeichnet, dass**
die zumindest eine Klemmeinrichtung (6, 56) auf der Seite der Negativform (1) zu befestigen ist, in der die Vertiefungen (4) angeordnet sind.

3. Vorrichtung nach einem der Ansprüche 1 oder 2, **dadurch gekennzeichnet, dass** die Vertiefungen (4) Negative der koronalen Enden (12) der Prothesenzähne (2) bilden oder
die Negativform (1) eine ebene Oberfläche aufweist, in der die Vertiefungen (4) angeordnet sind, wobei vorzugsweise die Negativform (1) eine der ebenen Oberfläche gegenüberliegende Standseite oder Aufstellfläche aufweist, wobei besonders bevorzugt die Negativform (1) eine Platte ist.

4. Vorrichtung nach einem der vorangehenden Ansprüche, **dadurch gekennzeichnet, dass**
die Vorrichtung mehrere Prothesenzähne (2) aufweist, wobei die Prothesenzähne (2) in den Vertiefungen (4) eingesetzt sind und mit der zumindest einen Klemmeinrichtung (6, 56) an der Negativform (1) fixiert sind.

5. Vorrichtung nach einem der vorangehenden Ansprüche, **dadurch gekennzeichnet, dass**
das Verbindungsmittel (10, 20, 40) zumindest einen Stift (20), zumindest eine Bohrung (40), zumindest eine Steckverbindung, zumindest eine Nut (40), zumindest eine Feder, zumindest eine Klammer, zumindest eine Zwinge, zumindest eine Gewindestange, zumindest eine Schraube (10), zumindest eine Gewindebohrung, zumindest ein Rastmittel, zumindest einen Druckknopf oder zumindest einen Klebstoff oder eine Kombination dieser Mittel aufweist, mit dem oder mit denen die zumindest eine Klemmeinrichtung (6, 56) an der Negativform (1) zu befestigen ist oder befestigt ist.

6. Vorrichtung nach einem der vorangehenden Ansprüche, **dadurch gekennzeichnet, dass**
die Negativform (1) einteilig ist und
die zumindest eine Klemmeinrichtung (6) mehrteilig ist und an den Teilen der zumindest einen Klemmeinrichtung (6) Befestigungsmittel (42) vorgesehen sind, über die die Teile aneinander zu befestigen sind.

7. Vorrichtung nach einem der vorangehenden Ansprüche, **dadurch gekennzeichnet, dass**
das zumindest eine elastische Haltemittel (8, 28, 38, 58) aus einem nicht plastisch verformbaren Material besteht, bevorzugt aus einem Material mit einem Elastizitätsmodul von wenigstens 0,2 GPa, besonders bevorzugt von wenigstens 0,2 GPa bis 6 GPa.

8. Vorrichtung nach einem der vorangehenden Ansprüche, **dadurch gekennzeichnet, dass**
das zumindest eine elastische Haltemittel (8, 28, 38, 58) zumindest ein Metallband (8) ist, insbesondere zumindest ein Band (8) aus Federstahl ist, wobei vorzugsweise an den zu den Prothesenzähnen (2) weisenden Oberflächen des Haltemittels (8) Kunststoffbeschichtungen vorgesehen sind und dass
die basalen Enden (14) der in der Vorrichtung fixierten Prothesenzähne (2) aus der zusammengesetzten Vorrichtung überstehen.

9. Vorrichtung nach einem der vorangehenden Ansprüche, **dadurch gekennzeichnet, dass**
die Vertiefungen (4) derart tief sind, dass sie bis maximal zum Beginn der Hinterschnittbereiche der Prothesenzähne (2) reichen und dass in jeder Vertiefung (4) wenigstens eine durchgehende Verbindung (18) vorgesehen ist, durch die ein Unterdruck in der Vertiefung (4) zu erzeugen ist und dass
das zumindest eine Haltemittel (8, 28, 38, 58) der zumindest einen Klemmeinrichtung (6, 56) an den Zahnhälsen (16) der Prothesenzähne (2) anliegt.

10. Vorrichtung nach einem der vorangehenden Ansprüche, **dadurch gekennzeichnet, dass**
die Summe der elastischen Kräfte des angelegten zumindest einen Haltemittels (8, 28, 38, 58) auf die Prothesenzähne (2) die Prothesenzähne (2) in Richtung der Vertiefungen (4) der Negativform (1) presst.

11. Verfahren zur Fixierung, und bevorzugt zur Bearbeitung, von Prothesenzähnen (2) aufweisend die folgenden Verfahrensschritte:
mehrere Prothesenzähne (2) werden in Vertiefungen (4) einer Negativform (1) eingesetzt,
anschließend wird zumindest eine Klemmeinrichtung (6, 56) an die eingesetzten Prothesenzähne (2) angelegt, wobei zumindest ein elastisches Haltemittel (8, 28, 38, 58) der zumindest einen Klemmeinrichtung (6, 56) an zumindest zwei Richtungen an den Zahnhälsen (16) der Prothesenzähne (2) anliegt, und
Befestigen der zumindest einen Klemmeinrichtung (6, 56) an der Negativform (1), so dass eine elastische Kraft des zumindest einen elastischen Haltemittels (8, 28, 38, 58) auf die Prothesenzähne (2) aus wenigstens zwei Richtungen einwirkt, wobei die Prothesenzähne (2) dadurch gegen die Negativform (1) fixiert werden.

12. Verfahren nach Anspruch 11, **dadurch gekennzeichnet, dass** das Verfahren mit einer Vorrichtung nach einem der Ansprüche 1 bis 10 durchgeführt wird.

13. Verfahren nach Anspruch 11 oder 12, **dadurch gekennzeichnet, dass**
beim Anlegen der zumindest einen Klemmeinrichtung (6, 56) das zumindest eine Haltemittel (8, 28, 38, 58) die Prothesenzähne (2) an ihren Zahnhälsen (16) zumindest bereichsweise umschließt, wobei die Innenflächen des zumindest einen Haltemittels (8, 28, 38, 58) zumindest bereichsweise formschlüssig zu Bereichen der Außenflächen der Prothesenzähne (2) passen und dass die zumindest eine Klemmeinrichtung (6, 56) derart an den Prothesenzähnen (2) angelegt wird, dass die basalen Enden (14) der Prothesenzähne (2) überstehen und dass
die zumindest eine Klemmeinrichtung (6, 56) und die Negativform (1) mit den darin fixierten Prothesenzähnen (2) in einer definierten Position in einer Halterung einer CAM-Vorrichtung (60) zum Abtragen von Material der Prothesenzähne (2) mit einem CAM-Verfahren befestigt werden und wenigstens ein basales Ende (14) zumindest eines Prothesenzahns (2) computergesteuert mit der CAM-Vorrichtung (60) bearbeitet wird, wobei die CAM-Vorrichtung (60) bevorzugt eine Computer-gesteuerte Fräseinrichtung (60) ist, besonders bevorzugt eine Computer-gesteuerte Vier-Achs-Fräse (60) oder Fünf-Achs-Fräse.

14. Verfahren nach einem der Ansprüche 11 bis 13, **dadurch gekennzeichnet, dass** die äußeren Formen aller verwendeten vorkonfektionierten Prothesenzähne (2) als erster Datensatz vorliegen und ein zweiter Datensatz die genaue Positionen aller fixierten vorkonfektionierten Prothesenzähne (2) in der Negativform (1) definiert, wobei eine anschließende Bearbeitung zumindest eines Prothesenzahns (2) auf Basis des ersten und des zweiten Datensatzes durchgeführt wird, bevorzugt eine anschließende Bearbeitung mit einem CAD/CAM-Verfahren auf Basis des ersten und des zweiten Datensatzes durchgeführt wird.

15. Verfahren nach einem der Ansprüche 11 bis 14, **dadurch gekennzeichnet, dass** alle vorkonfektionierten Prothesenzähne (2) nur in jeweils einer vorgegebenen Position und Orientierung in die Negativform (1) eingesetzt werden können und mit der zumindest einen Klemmeinrichtung (6, 56) fixiert werden können und/oder dass
vor dem Einsetzen der Prothesenzähne (2) in die Negativform (1) ein Haftvermittler auf der Oberfläche der Vertiefungen (4) und/oder auf der Oberfläche der koronalen Seiten (12) der Prothesenzähne (2) aufgetragen wird.

16. Set zur Durchführung eines Verfahrens nach einem der Ansprüche 11 bis 15 aufweisend mehrere vorkonfektionierte Prothesenzähne (2) und wenigstens eine Vorrichtung nach einem der Ansprüche 1 bis 10, wobei vorzugsweise das Set zusätzlich den ersten Datensatz zur äußeren Form aller vorkonfektionierten Prothesenzähne (2) und einen zweiten Datensatz zur Position der vorkonfektionierten Prothesenzähne (2) in der zusammengesetzten Vorrichtung enthält, besonders bevorzugt auf einem Datenträger.

## Claims

1. A device for holding prosthetic teeth (2), the device comprising a negative form (1) and at least one clamping unit (6, 56), wherein
recesses (4) for holding coronal sides (12) of the prosthetic teeth (2) are provided in the negative form (1), wherein the recesses (4) are formed in such a manner that the prosthetic teeth (2) can be inserted in an unequivocally position and orientation into the recesses (4), wherein
the at least one clamping unit (6, 56) is affixable or is affixed to the negative form (1) with a connecting means (10, 20, 40), and wherein the at least one clamping unit (6, 56) has at least one elastic holding means (8, 28, 38, 58), wherein with the at least one elastic holding means (8, 28, 38, 58), an elastic force is exercisable or is exerted from at least two different directions onto the prosthetic teeth (2) inserted into the negative form (1), while the at least one clamping unit (6, 56) is affixed to the negative form (1), such that the prosthetic teeth (2) are affixed in the device.

2. The device according to claim 1, **characterized in that**
the at least one clamping unit (6, 56) is affixable on the side of the negative form (1) in which the recesses (4) are arranged.

3. The device according to either of claims 1 or 2, **characterized in that** the recesses (4) form negatives of the coronal ends (12) of the prosthetic teeth (2) or
the negative form (1) has an even surface, in which the recesses (4) are arranged, wherein preferably, the negative form (1) has a standing side or arrangement area opposite the even surface, wherein in a particularly preferred manner, the negative form (1) is a plate.

4. The device according to any one of the preceding claims, **characterized in that** the device has several prosthetic teeth (2), wherein the prosthetic teeth (2) are inserted in the recesses (4) and are affixed with the at least one clamping unit (6, 56) on the negative form (1).

5. The device according to any one of the preceding claims, **characterized in that** the connecting means (10, 20, 40) comprises at least one pin (20), at least one bore hole (40), at least one plug-in connection, at least one groove (40), at least one tongue, at least one bracket, at least one clamp, at least one threaded rod, at least one screw (10), at least one threaded bore, at least one latching means, at least one push button or at least one adhesive, or a combination of these means, with which the at least one clamping unit (6, 56) is affixable or is affixed to the negative form (1).

6. The device according to any one of the preceding claims, **characterized in that** the negative form (1) is a single part and
the at least one clamping unit (6) is multi-part, and on the parts of the at least one clamping unit (6), fastening means (42) are provided via which the parts are to be affixed to each other.

7. The device according to any one of the preceding claims, **characterized in that** the at least one elastic holding means (8, 28, 38, 58) consists of a non plastically deformable material, preferably of a material with an elasticity module of at least 0.2 GPa, particularly preferred, 0.2 GPa to 6 GPa.

8. The device according to any one of the preceding claims, **characterized in that** the at least one elastic holding means (8, 28, 38, 58) is at least one metal strip (8), in particular a strip (8) made of spring steel, wherein preferably, synthetic coatings are provided on the surfaces of the holding means (8) pointing towards the prosthetic teeth (2) and that
the basal ends (14) of the prosthetic teeth (2) affixed in the device protrude from the composite device.

9. The device according to any one of the preceding claims, **characterized in that** the recesses (4) are of such a depth that they extend up to a maximum of the beginning of the undercut zones of the prosthetic teeth (2) and that
in each recess (4), at least one through-connection (18) is provided, through which an underpressure is producible in the recess (4) and that
the at least one holding means (8, 28, 38, 58) of the at least one clamping unit (6, 56) is applied to the tooth necks (16) of the prosthetic teeth (2).

10. The device according to any one of the preceding claims, **characterized in that** the sum of the elastic forces of the at least one holding means (8, 28, 38, 58) applied onto the prosthetic teeth (2) presses the prosthetic teeth (2) in the direction of the recesses (4) of the negative form (1).

11. A method for affixing, and preferably for processing, prosthetic teeth (2), having the following method steps:
several prosthetic teeth (2) are inserted into recesses (4) of a negative form (1), subsequently, at least one clamping unit (6, 56) is applied to the inserted prosthetic teeth (2), wherein at least one elastic holding means (8, 28, 38, 58) of the at least one clamping unit (6, 56) is applied on at least two directions on the tooth necks (16) of the prosthetic teeth (2), and
affixing of the at least one clamping unit (6, 56) on the negative form (1), so that an elastic force of the at least one elastic holding means (8, 28, 38, 58) acts on the prosthetic teeth (2) from at least two directions, wherein the prosthetic teeth (2) are affixed against the negative form (1) as a result.

12. The method according to claim 11, **characterized in that**
the method is performed using a device according to any one of the claims 1 to 10.

13. The method according to claim 11 or 12, **characterized in that**
when the at least one clamping unit (6, 56) is applied, the at least one holding means (8, 28, 38, 58) encloses the prosthetic teeth (2) on their tooth necks (16) at least in sections, wherein the inner areas of the at least one holding means (8, 28, 38, 58) fit at least in sections in an engaging manner to sections of the outer areas of the prosthetic teeth (2) and that
the at least one clamping unit (6, 56) is applied to the prosthetic teeth (2) in such a manner that the basal ends (14) of the prosthetic teeth (2) protrude and that the at least one clamping unit (6, 56) and the negative form (1) with the prosthetic teeth (2) affixed in it are affixed in a defined position in a holder of a CAM device (60) for removing material of the prosthetic teeth (2) with a CAM method, and at least one basal end (14) of at least one prosthetic tooth (2) is processed in a computer-controlled manner using the CAM device (60), wherein the CAM device (60) is preferably a computer-controlled milling machine (60), particularly preferred, a computer-controlled four-axis mill (60) or five-axis mill.

14. The method according to any one of claims 11 to 13, **characterized in that** the outer forms of all pre-fabricated prosthetic teeth (2) used are present as a first data set, and a second data set defines the precise positions of all affixed pre-fabricated prosthetic teeth (2) in the negative form (1), wherein a subsequent processing at least of one prosthetic tooth (2) on the basis of the first and second data set is conducted, preferably a subsequent processing using a CAD/CAM method is conducted on the basis of the first and second data set.

15. The method according to any one of claims 11 to 14, **characterized in that** all pre-fabricated prosthetic teeth (2) can only be inserted in one specified position and orientation respectively into the negative form (1), and can be affixed with the at least one clamping unit (6, 56) and/or that before inserting the prosthetic teeth (2) into the negative form (1), a bonding agent is applied to the surface of the recesses (4) and/or to the surface of the coronal sides (12) of the prosthetic teeth (2).

16. A set for implementing a method according to any one of claims 11 to 15, having several pre-fabricated prosthetic teeth (2) and at least one device according to any one of claims 1 to 10, wherein preferably the set additionally contains the first data set on the outer form of all pre-fabricated prosthetic teeth (2), and a second data set on the position of the pre-fabricated prosthetic teeth (2) in the composite device, preferably on a data storage device.

## Revendications

1. Dispositif de maintien de dents prothétiques (2), le dispositif présentant une forme négative (1) et au moins un dispositif de serrage (6, 56), où
des cavités (4) sont prévues dans la forme négative (1) pour la réception de faces coronales (12) des dents prothétiques (2), les cavités (4) étant formées de telle manière que les dents prothétiques (2) sont à implanter dans une position et une orientation précises dans les cavités (4), où
l'au moins un dispositif de serrage (6, 56) est à fixer ou est fixé de manière amovible sur la forme négative (1) avec un moyen de liaison (10, 20, 40) et où l'au moins un dispositif de serrage (6, 56) présente au moins un moyen de maintien (8, 28, 38, 58) élastique, où une force élastique provenant d'au moins deux directions différentes est à exercer ou s'exerce sur les dents prothétiques (2) implantées dans la forme négative (1) avec l'au moins un moyen de maintien (8, 28, 38, 58) élastique pendant que l'au moins un dispositif de serrage (6, 56) est fixé sur la forme négative (1), de sorte que les dents prothétiques (2) sont fixées dans le dispositif.

2. Dispositif selon la revendication 1, **caractérisé en ce que**
l'au moins un dispositif de serrage (6, 56) est à fixer sur le côté de la forme négative (1) dans lequel sont disposées les cavités (4).

3. Dispositif selon l'une des revendications 1 ou 2, **caractérisé en ce que** les cavités (4) forment des négatifs des extrémités coronales (12) des dents prothétiques (2), ou
la forme négative (1) présente une surface plane dans laquelle sont disposées les cavités (4), où, de préférence, la forme négative (1) présente un côté de position debout ou une surface de pose située en face de la surface plane, où la forme négative (1) est de préférence une plaque.

4. Dispositif selon l'une des revendications précédentes, **caractérisé en ce que**
le dispositif présente plusieurs dents prothétiques (2), où les dents prothétiques (2) sont implantées dans les cavités (4) et sont fixées avec l'au moins un dispositif de serrage (6, 56) dans la forme négative (1).

5. Dispositif selon l'une des revendications précédentes, **caractérisé en ce que** le moyen de liaison (10, 20, 40) présente au moins une tige (20), au moins un alésage (40), au moins une connexion par fiche, au moins une rainure (40), au moins un ressort, au moins une agrafe, au moins un embout, au moins une tige filetée, au moins une vis (10), au moins un trou fileté, au moins un élément de butée, au moins un bouton-pression ou au moins un adhésif ou une combinaison de ces moyens, avec lequel ou avec lesquels l'au moins un dispositif de serrage (6, 56) est à fixer ou est fixé sur la forme négative (1).

6. Dispositif selon l'une des revendications précédentes, **caractérisé en ce que**
la forme négative (1) est en une seule pièce et
l'au moins un dispositif de serrage (6) est en plusieurs pièces et des moyens de fixation (42) sont prévus sur les pièces de l'au moins un dispositif de serrage (6) par lesquels les pièces sont à fixer les unes aux autres.

7. Dispositif selon l'une des revendications précédentes, **caractérisé en ce que**
l'au moins un moyen de maintien (8, 28, 38, 58) élastique est constitué d'un matériau ne se transformant pas de manière plastique, de préférence à base d'un matériau avec un module d'élasticité d'au moins 0,2 GPa, de manière particulièrement préférée d'au moins 0,2 GPa à 6 GPa.

8. Dispositif selon l'une des revendications précédentes, **caractérisé en ce que**
l'au moins un moyen de maintien (8, 28, 38, 58) élastique est au moins une bande métallique (8), est, notamment, au moins une bande (8) en acier à ressort, où, de préférence, des revêtements en matière plastique sont prévus sur les surfaces du moyen de maintien (8) orientées vers les dents prothétiques (2), et que les extrémités basales (14) des dents prothétiques (2) fixées dans le dispositif dépassent du dispositif assemblé.

9. Dispositif selon l'une des revendications précédentes, **caractérisé en ce que**
les cavités (4) ont une telle profondeur qu'elles atteignent au maximum le début des zones de contre-dépouille des dents prothétiques (2), et que dans chaque cavité (4), au moins une liaison (18) continue est prévue à travers laquelle une pression négative peut être créée dans la cavité (4), et que l'au moins un moyen de maintien (8, 28, 38, 58) de l'au moins un dispositif de serrage (6, 56) est adjacent aux collets de dents (16) des dents prothétiques (2).

10. Dispositif selon l'une des revendications précédentes, **caractérisé en ce que**
la somme des forces élastiques de l'au moins un moyen de maintien (8, 28, 38, 58) appliqué sur les dents prothétiques (2) comprime les dents prothétiques (2) en direction des cavités (4) de la forme négative (1).

11. Procédé de fixation, et de préférence de façonnage, de dents prothétiques (2), présentant les étapes de procédé suivantes :
plusieurs dents prothétiques (2) sont insérées dans des cavités (4) d'une forme négative (1),
ensuite, on applique au moins un dispositif de serrage (6, 56) sur les dents prothétiques (2) insérées, où au moins un moyen de maintien (8, 28, 38, 58) élastique de l'au moins un dispositif de serrage (6, 56) est adjacent à au moins deux directions sur les collets de dents (16) des dents prothétiques (2), et
la fixation de l'au moins un dispositif de serrage (6, 56) sur la forme négative (1) de sorte qu'une force élastique de l'au moins un moyen de maintien (8, 28, 38, 58) élastique s'exerce sur les dents prothétiques (2) à partir d'au moins deux directions,
où les dents prothétiques (2) sont fixées ainsi contre la forme négative (1).

12. Procédé selon la revendication 11, **caractérisé en ce que**
le procédé est effectué avec un dispositif selon l'une des revendications 1 à 10.

13. Procédé selon la revendication 11 ou la revendication 12, **caractérisé en ce que**
lors de l'application de l'au moins un dispositif de serrage (6, 56), l'au moins un moyen de maintien (8, 28, 38, 58) entoure au moins par endroits les dents prothétiques (2) au niveau de leurs collets de dents (16), où les surfaces intérieures de l'au moins un moyen de maintien (8, 28, 38, 58) sont ajustées au moins par endroits par complémentarité des formes à des zones des surfaces extérieures des dents prothétiques (2) et que
l'au moins un dispositif de serrage (6, 56) est appliqué sur les dents prothétiques (2) de telle manière que les extrémités basales (14) des dents prothétiques (2) dépassent, et que
l'au moins un dispositif de serrage (6, 56) et la forme négative (1) avec les dents prothétiques (2) fixées dedans sont fixés dans une position définie dans un support d'un dispositif de FAO (60) pour le retrait de matière des dents prothétiques (2) avec un procédé de FAO et au moins une extrémité basale (14) d'au moins une dent prothétique (2) est façonnée avec un dispositif de FAO commandé par ordinateur, où le dispositif de FAO est de préférence un dispositif de fraisage commandé par ordinateur (60), de manière particulièrement préférée, une fraise à quatre axes (60) ou une fraise à cinq axes commandée par ordinateur.

14. Procédé selon l'une des revendications 11 à 13, **caractérisé en ce que** les formes extérieures de toutes les dents prothétiques (2) pré confectionnées employées se présentent sous forme d'un premier ensemble de données et un deuxième ensemble de données définit les positions exactes de toutes les dents prothétiques (2) pré confectionnées fixées dans la forme négative (1), où un façonnage ultérieur d'au moins une dent prothétique (2) est exécuté sur la base des premier et second ensembles de données, de préférence, un façonnage avec un procédé CAO/FAO sur la base du premier et du second ensemble de données.

15. Procédé selon l'une des revendications 11 à 14, **caractérisé en ce que**
toutes les dents prothétiques (2) pré confectionnées ne peuvent être implantées que dans une position et une orientation prédéfinies respectives dans la forme négative (1) et peuvent être fixées avec l'au moins un dispositif de serrage (6, 56), et/ou avant l'implantation des dents prothétiques (2) dans la forme négative (1), un promoteur d'adhésion est appliqué sur la surface des cavités (4) et/ou sur la surface des faces coronales (12) des dents prothétiques (2).

16. Ensemble destiné à l'exécution d'un procédé selon l'une des revendications 11 à 15, présentant plusieurs dents prothétiques (2) pré confectionnées et au moins un dispositif selon l'une des revendications 1 à 10, où, de préférence, l'ensemble contient en outre le premier ensemble de données pour la forme extérieure de toutes les dents prothétiques (2) pré confectionnées et un second ensemble de données pour la position des dents prothétiques (2) pré confectionnées dans le dispositif assemblé, de manière particulièrement préférée, sur un support de données.
